# EUROPEAN PATENT APPLICATION

(11) **EP 2 261 062 A1**
(43) Date of publication of application: **15.12.2010**
(21) Application number: 10001043.8
(22) Date of filing: 02.02.2010
(51) Int. Cl.: B60C 11/00, B60C 11/01

(54) **Motorcycle tire**

(30) Priority: 11.06.2009 JP 2009140499
(71) Applicant: Sumitomo Rubber Industries, Ltd., Kobe-shi Hyogo-ken (JP)
(72) Inventor: Yoshida, Shu, Kobe-shi, Hyogo-ken 651-0072 (JP)
(74) Representative: Manitz, Finsterwald & Partner GbR

(57) **Abstract**

A motorcycle tire (1) having an improved cornering performance and comprising a carcass (6) extending from a tread portion (2) to bead cores (5) in opposing bead portions (4) through sidewall portions (3), a tread reinforcing cord layer (7) disposed radially outward of the carcass (6) in the tread portion (2), a tread rubber (Tg) extending between the axially outer edges of the tread portion (2), and a pair of edge rubbers (Eg) extending axially inwardly with a small thickness from an axially outer surface of the tire in contact with both side surfaces of the tread rubber (Tg) and having a hardness (He) larger than a hardness (Ht) of the tread rubber (Tg).

## Description

### BACKGROUND OF THE INVENTION

The present invention relates to a tire for motorcycles, and more particularly to a motorcycle tire having an improved cornering performance.

When a motorcycle is turned, it is leaned to give a camber angle (bank angle) to a tire, thereby generating a camber thrust to turn the motorcycle with resisting a centrifugal force. From the viewpoint of cornering performance, the motorcycle tire is required to have a high lateral rigidity. However, an excessively high lateral rigidity may impair a straight running stability and a shock absorption performance which absorbs roughness of roads.

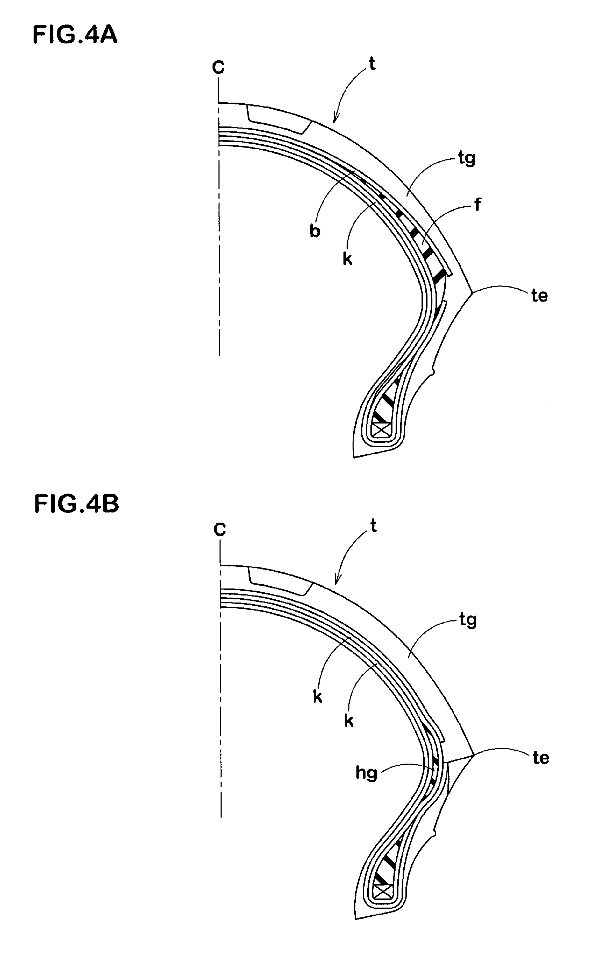

JP-A-5-213006 proposes a motorcycle tire having a filler "f" made of a hard rubber in each shoulder region of a tread portion "t", as shown in Fig. 4A. The filler "f" is interposed between a belt layer "b" formed by spirally winding a ribbon-like ply and a carcass "k". Further, JP-A-2006-142922 proposes a motorcycle tire having a hard rubber layer "hg" in the vicinity of axially outer edges "te" of a tread portion "t", as shown in Fig. 4B. The hard rubber layer "hg" is interposed between two carcass plies "k". In these proposals, the cornering stability is improved by reinforcing an inside structure in a shoulder region of a tread portion or in a side region of a tire.

In these proposed motorcycle tires, the inside structure can be reinforced, but a tread rubber "tg" which is relatively soft from the viewpoint of grip performance extends between the axially outer edges "te" of the tread portion "t". Therefore, when cornering at a large camber angle, a portion near an outer edge of the tread rubber "tg" receives a great lateral deformation in a direction of the inside of the cornering owing to a reaction force from a road, so a ground contact area or tire footprint is easy to become unstable. Thus, these proposed motorcycle tires have a problem that a stable large camber angle is hard to be obtained during cornering.

Accordingly, it is an object of the present invention to provide a tire for motorcycles which has an improved cornering performance by stabilizing the tire footprint in cornering so as to be able to generate a stable and large camber thrust.

This and other objects of the present invention will become apparent from the description hereinafter.

### SUMMARY OF THE INVENTION

The present invention is characterized in providing a motorcycle tire with a pair of hard edge rubbers which are connected with both side surfaces of the tread rubber and which extend axially inwardly with a small thickness, preferably extend axially inwardly from or near the axially outer edges of the tread portion to cover the entire side surfaces of the tread rubber.

In accordance with the present invention, there is provided a motorcycle tire comprising:
a carcass extending from a tread portion to each of a pair of bead cores in opposing bead portions through sidewall portions, said tread portion having a ground contact surface curved in the form of a radially outwardly convex arc and extending axially outwardly from the tire equator so that a tread width defined by an axial distance between both axially outer edges of the tread portion provides the maximum width of the tire,
a tread reinforcing cord layer disposed radially outward of the carcass in the tread portion,
a tread rubber extending between the axially outer edges of the tread portion, and
a pair of edge rubbers which are connected with both side surfaces of the tread rubber and extend axially inwardly with a small thickness from an axially outer surface of the tire and which has a hardness He larger than a hardness Ht of the tread rubber.

The edge rubbers serve to reinforce side portions of the carcass and axial edge portions of the tread reinforcing cord layer to stabilize the shape of the carcass and the tread reinforcing cord layer. Further, the edge rubbers hold the tread rubber from the both sides thereof and, therefore, serve to suppress generation of a large strain in the tread rubber in cornering, namely deformation of the tread rubber toward inside of cornering. Thus, in the motorcycle tire of the present invention, the ground contact area or footprint of the tread portion during cornering is stabilized by these actions, whereby a large camber thrust can be obtained, behavior of a motorcycle during cornering is stabilized, and the cornering speed is increased.

Since the edge rubber has a small thickness and is disposed at a region of a tread edge, it has no opportunity of contacting a road during straight running. Therefore, the straight running stability based on the tread rubber is not hindered.

Preferably, each of the edge rubbers is disposed so that the center line of the thickness of the edge rubber forms an angle of at most 10° with a normal line to the carcass drawn to a point at the intersection of a radially outer surface of the carcass with an extension of the center line. Since such an edge rubber is disposed substantially perpendicular to the carcass, the cornering performance can be improved with suppressing a change in performances of the carcass in running, e.g., deterioration of ride comfort. Further, such an edge rubber will be positioned approximately perpendicular to a road when cornering at a very large camber angle. In case of such a cornering, the edge rubber receives a reaction force from a road and can more effectively prevent the tread rubber from laterally deforming in a direction of inward of cornering.

In a meridian cross section including the rotational axis of the tire, the edge rubbers may have a constant thickness, a thickness gradually increasing toward axially inward of the tire, or a thickness gradually decreasing toward axially inward of the tire. Preferably, the thickness of the edge rubbers is from 1.5 to 3.0 mm. The edge rubber having a thickness gradually increasing toward axially inward of the tire can more effectively suppress lifting of carcass and/or tread reinforcing cord layer to stabilize the tire footprint, since an axially outer surface of the carcass and/or the cord layer is pressed by an increased area of the edge rubber as compared with an edge rubber having a constant thickness. The edge rubber having a thickness gradually increasing toward axially outward of the tire can more effectively suppress a large lateral deformation of the tread rubber which occurs when cornering at a very large camber angle.

Preferably, a wing rubber is further disposed radially inward of each of the edge rubbers in contact with the radially inner surface of the edge rubber. The wing rubber has an approximately triangular cross section such that an axial width thereof gradually decreases toward radially inward of the tire and an axially outer surface thereof forms a buttress surface (an upper part of the sidewall portion) of the tire.

An axially inner end of the edge rubber is connected with, for example, an axial edge portion of the tread reinforcing cord layer, or an radially outer surface of the carcass.

### BRIEF DESCRIPTION OF THE DRAWINGS

Fig. 1 is a cross sectional view of a right half of a pneumatic tire for motorcycles showing an embodiment of the present invention;
Fig. 2 is an enlarged partial view showing a part of the tire shown in Fig. 1;
Figs. 3A and 3B are cross sectional views showing other embodiments of the edge rubber of the invention;
Figs. 4A and 4B are cross sectional views of conventional motorcycle tires; and

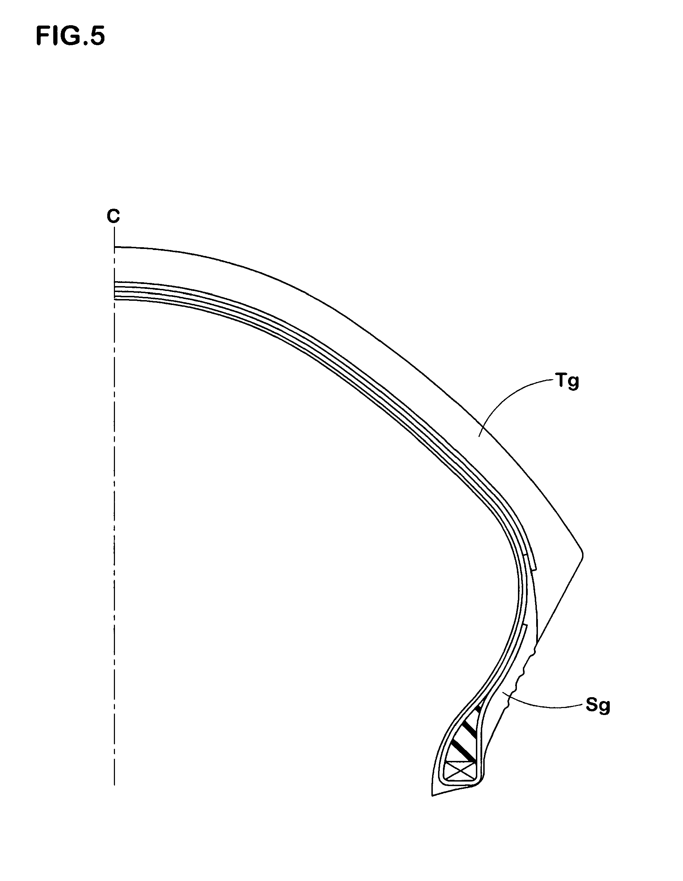

Fig. 5 is a cross sectional view showing the structure of a motorcycle tire prepared in Comparative Example 1 described after.

### DETAILED DESCRIPTION OF THE INVENTION

An embodiment of the present invention will now be explained with reference to the accompanying drawings.

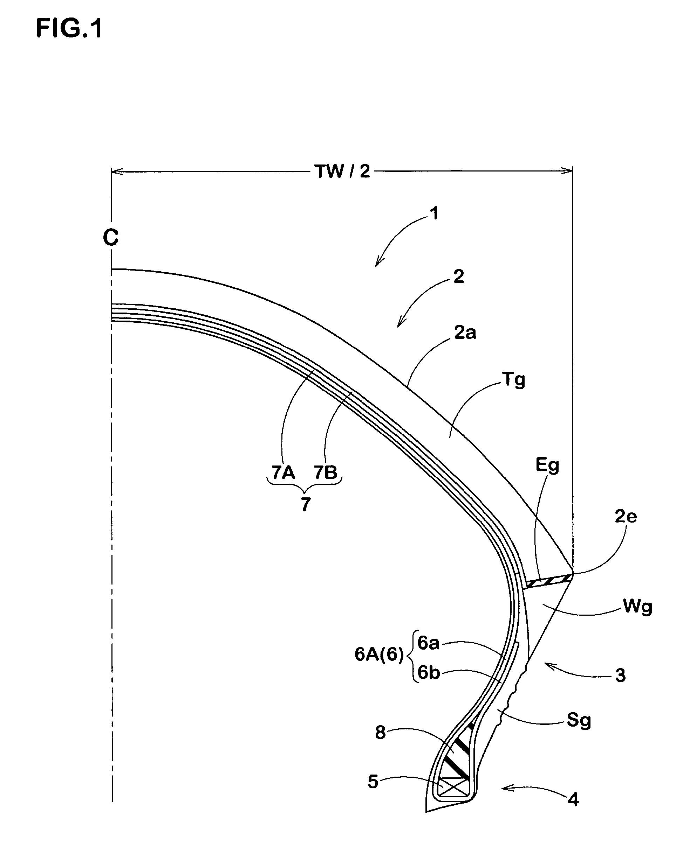

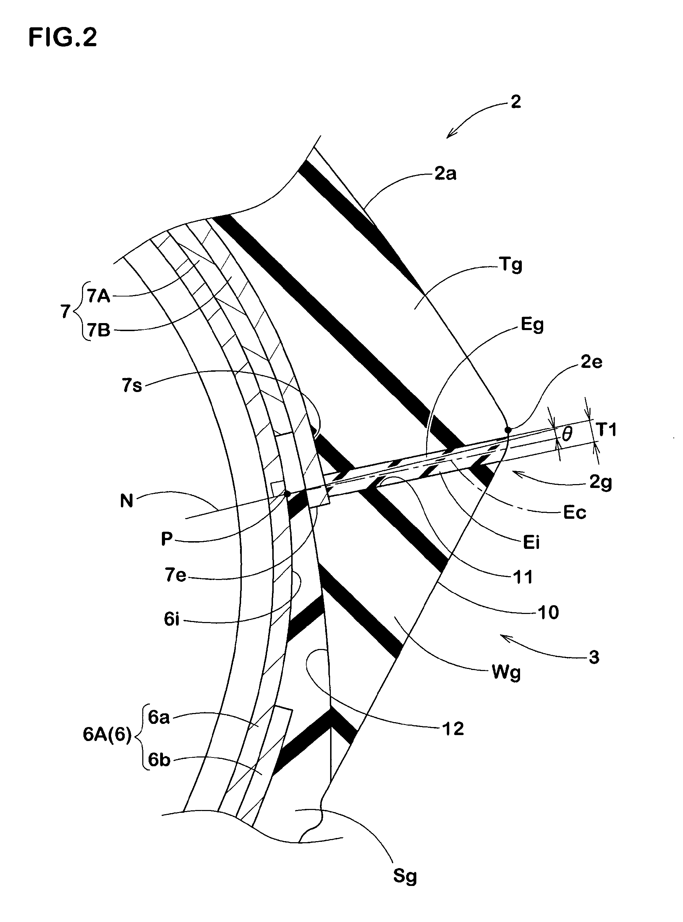

Referring to Fig. 1 and Fig. 2, a motorcycle tire 1 according to the present invention includes a carcass 6 extending from a tread portion 2 to each of a pair of bead cores 5 in opposing bead portions 4 through sidewall portions 3, a tread reinforcing cord layer 7 having a cord or cords and disposed radially outward of the carcass 6 in the tread portion 2, and a tread rubber Tg extending between axially outer edges 2e of the tread portion 2. Both side edge portions 7s, 7s of the tread reinforcing cord layer 7 are located in the vicinity of the axially outer edges 2e, 2e of the tread portion 2.

Fig. 1 shows a motorcycle tire in a normal condition that the tire 1 is mounted on a normal rim (not shown) and inflated to a normal inner pressure and no load is applied to the tire. The term "normal rim" denotes a rim defined for every tire in a standardizing system on which the tire is based and is, for example, "standard rim" in JATMA, "Design Rim" in TRA and "Measuring Rim" in ETRTO. The term "normal inner pressure" denotes an air pressure defined for every tire in the standardizing system and is, for example, the "maximum air pressure" in JATMA, the maximum value recited in the table of "Tire Load Limits at Various Cold Inflation Pressures" in TRA, and the "Inflation Pressure" in ETRTO".

In the motorcycle tire 1 of the present invention, a tread width TW defined by an axial distance between both axially outer edges 2e, 2e of the tread portion 2 provides the maximum width of the tire. The tread portion 2 has a ground contact surface 2a extending axially outwardly from tire equator C and curved in the form of a radially outwardly convex arc. Such a tread portion 2 can generate a camber thrust with bringing the ground contact surface 2a smoothly into contact with a road even in the case that a large camber angle is given to the tire. The tread portion 2 may be provided with a groove or grooves for drainage (not shown).

The carcass 6 comprises at least one carcass ply 6A (in this embodiment, single carcass ply) in which carcass cords, preferably organic fiber cords, are arranged at an angle of, for instance, 75 to 90°, with respect to the tire equator C. The carcass ply 6A is composed of a main portion 6a that extends from the tread portion 2 to the bead cores 5 disposed in the bead portions 4 through the sidewall portions 3, and turnup portions 6b that extend from both axial ends of the main portion 6a and are turned up around the bead cores 5 from axially inward of the tire to axially outward of the tire to thereby anchor the carcass ply.

Between the main portion 6a and each turnup portion 6b is disposed a bead apex rubber 8 made of a hard rubber that extends radially outwardly from the bead core 5 in a tapered manner.

The tread reinforcing cord layer 7, e.g., belt layer and/or band layer, comprises at least one ply of reinforcing cords, preferably a plurality of plies of reinforcing cords. The tread reinforcing cord layer 7 shown in this embodiment is a belt layer composed of radially inner and outer belt plies 7A and 7B. Any of known tread reinforcing cord layers can be used in the present invention. The tread reinforcing cord layer 7 may be formed of, for instance, a so-called cut ply and/or a so-called jointless ply formed by spirally winding a single rubberized cord or a ribbon-like ply of a plurality of rubberized cords on a radially outer surface of the carcass 6 at a cord angle of at most 5° with respect to a circumferential direction of the tire.

As a reinforcing cord are preferred organic fiber cords such as nylon, rayon, polyester, aromatic polyamide and the like. Steel cords or the like may be used, as occasion demands.

In the belt layer shown in this embodiment, the radially outer belt ply 7B has a larger width than the radially inner belt ply 7A, and axially outer ends of the outer belt ply 7B forms axially outer ends 7e of the tread reinforcing cord layer 7. The side edge portions 7s of the tread reinforcing cord layer 7 extend radially inwardly so that the axially outer ends 7e of the tread reinforcing cord layer 7 are located radially inward of the tread edges 2e. Such a structure serves to enhance the rigidity of a portion near the tread edge 2e.

The tread portion 2 is provided with a tread rubber Tg extending between the axially outer edges 2e, 2e of the tread portion 2, and a pair of edge rubbers Eg which are connected with both side surfaces of the tread rubber Tg and extend axially inwardly with a small thickness. Each of the edge rubbers Eg in this embodiment as shown in Figs. 1 and 2 is disposed radially inward of the side surface of the tread rubber Tg in contact with the side surface so that an axially outer surface of the edge rubber Eg is exposed at a location radially inward of the tread edge 2e, i.e., a location just below the tread edge 2e. Therefore, the grip force of the tire does not lower even in cornering at a large camber angle. Further, an axially inner end of the edge rubber Eg is connected with an axial edge portion 7s of the tread reinforcing cord layer 7, whereby the tread reinforcing cord layer 7 can be effectively prevented from lifting.

The tread rubber Tg is disposed in a region which comes into contact with a road during from straight running to cornering, and exhibits a driving force and a lateral force in straight running and cornering, and a braking force. In order to secure a wear resistance while exhibiting these motion performances, it is preferable that the tread rubber Tg has a hardness Ht of at least 56, especially at least 60, and at most 68, especially at most 66. The tread rubber Tg may be formed of two or more kinds of rubbers having different hardness which are radially disposed or axially disposed to form a composite tread rubber Tg.

The term "hardness" as used herein denotes a Durometer A hardness measured by a durometer type A hardness tester according to JIS K 6253.

The edge rubbers Eg have a hardness He larger than a hardness Ht of the tread rubber Tg. The edge rubbers Eg having such a hardness serve to reinforce the axial edge portion 7s of the tread reinforcing cord layer 7 and side portions of the carcass 6 to stabilize the shape of them. Further, since the tread rubber Tg is sandwiched between the edge rubbers Eg from the both sides of the tread rubber and, therefore, serve to suppress deformation of the tread rubber Tg in cornering. Thus, the motorcycle tire 1 in this embodiment can obtain a large camber thrust, since the ground contact area or footprint of the tread portion 2 during cornering is stabilized by these actions.

Each edge rubber Eg has a small thickness and is disposed at a tread edge region 2g. Therefore, the edge rubber Eg has scarcely opportunity of contacting a road with the exception of cornering at a large camber angle, and the straight running stability of the tire based on the tread rubber Tg is not hindered.

In order to significantly exhibit these actions, it is preferable that a difference H1, i.e., "He - Ht", between the hardness He of the edge rubber Eg and the hardness Ht of the tread rubber Tg is at least 2, especially at least 6. If the hardness difference H1 is less than 2, it is difficult to suppress occurrence of a strain in cornering in the vicinity of the axially outer edges of the tread rubber Tg. If the hardness difference H1 is too large, a strain is easy to concentrate on the interface between the tread rubber Tg and the edge rubber Eg and adhesion failure tends to occur. From such points of view, it is preferable that the hardness difference H1 is at most 16, especially at most 14. Regarding the hardness difference H1, in the case that the tread rubber Tg is composed of a plurality of rubber portions, the hardness Ht of the tread rubber Tg denotes a hardness of a rubber portion which is in contact with the edge rubber Eg. In the case that a plurality of rubber portions in the tread rubber are in contact with the edge rubber Eg, it is preferable that all these rubber portions of the tread rubber Tg satisfy the hardness difference H1 mentioned above.

Preferably, the hardness He of the edge rubber Eg is at least 65, especially at least 70, and is at most 85, especially at most 80.

The shape of the edge rubber Eg is not particularly limited. For example, the edge rubber Eg may be in the form of a sheet or ribbon having a small thickness T1, as shown in Figs. 1 and 2. In the meridian cross section including the rotational axis of the tire, such an edge rubber Eg extends axially inwardly from the tread edge 2e or from a location near the tread edge 2e with keeping a constant thickness T1. Since an edge rubber having a constant thickness can be easily produced and handled, the productivity of tire 1 is not impaired.

If the thickness T1 of the edge rubber Eg is too large, the rigidity is excessively enhanced at a location near the tread edge 2e, so the ride comfort tends to deteriorate. On the other hand, if the thickness T1 is too small, there is a possibility that a lateral deformation of the tread rubber 2 cannot be sufficiently suppressed. From such points of view, it is preferable that the thickness T1 of the edge rubber Eg is at least 1.0 mm, especially at least 1.5 mm, and is at most 4.0 mm, especially at most 3.0 mm.

Preferably, each of the edge rubbers Eg is disposed so that the center line Ec of the thickness of the edge rubber Eg forms an angle θ of at most 10° with a normal line N to the carcass 6 drawn to a point P at the intersection of a radially outer surface 6i of the carcass 6 with an extension of the center line Ec. Since such an edge rubber Eg is disposed substantially perpendicular to the carcass 6, the cornering performance can be improved with suppressing a change in deflection property of the carcass 6 in running to thereby prevent deterioration of tire performances such as deterioration of ride comfort. Further, when cornering at a very large camber angle, a reaction force from a road is dispersed to the outer surface 6i of the carcass through the edge rubber Eg and, therefore, the tire footprint is further stabilized.

As shown in Figs. 1 and 2, in each sidewall portion 3 extending from the tread portion 2 to the bead portion 4, a sidewall rubber Sg is disposed axially outward of the carcass 6. A relatively soft rubber is used for the sidewall rubber Sg so that the sidewall rubber Sg can follow a flexible deformation of the carcass 6. It is preferable that the hardness Hs of the sidewall rubber Sg is at least 50, especially at least 55, and is at most 65, especially at most 60.

In the embodiment shown in Figs. 1 and 2, the sidewall rubber Sg extends radially outwardly from the bead portion 4 beyond the axially outer edge 7e of the radially outer ply 7B of the tread reinforcing cord layer 7 and terminates at an axially outer edge of the radially inner ply 7A of the tread reinforcing cord layer 7 so that a radially outer edge portion of the sidewall rubber Sg is interposed between the carcass 6 and the radially outer ply 7B. The radially inner ply 7A is in contact with the carcass 6.

Preferably, a pair of wing rubbers Wg are disposed radially inward of the edge rubbers Eg, as shown in Figs. 1 and 2. Each of the wing rubbers Wg has an approximately triangular cross section such that the axial width of the wing rubber Eg gradually decreases toward radially inward of the tire and the axially outer surface of the wing rubber Wg forms a buttress surface 10 of the tire 1, i.e., an upper part of an axially outer surface of the sidewall portion 3. Thus, the wing rubber Wg has the buttress surface 10 (axially outer surface), a radially outer surface 11 which is in contact with a radially inner surface Ei of the edge rubber Eg and the axial end 7e of the tread reinforcing cord layer 7, and an axially inner surface 12 which extends radially inwardly from the axial end 7e of the cord layer 7 in contact with the sidewall rubber Sg.

Since such a wing rubber Wg is interposed between the edge rubber Eg and the sidewall rubber Sg, it serves to prevent direct contact of the edge rubber Eg which is hard and the sidewall rubber Sg which is soft, thereby preventing separation damage from occurring between the edge rubber Eg and the sidewall rubber Sg with absorbing and easing a shearing strain between these rubbers Eg and Sg. From such a point of view, it is preferable that the hardness Hw of the wing rubber Wg is at least 50, especially at least 55, and is at most 65, especially at most 60. For the purpose of exhibiting a driving force for straight running and cornering, a lateral force and a braking force, the wing rubbers Wg may have substantially the same hardness as the hardness of the tread rubber Tg.

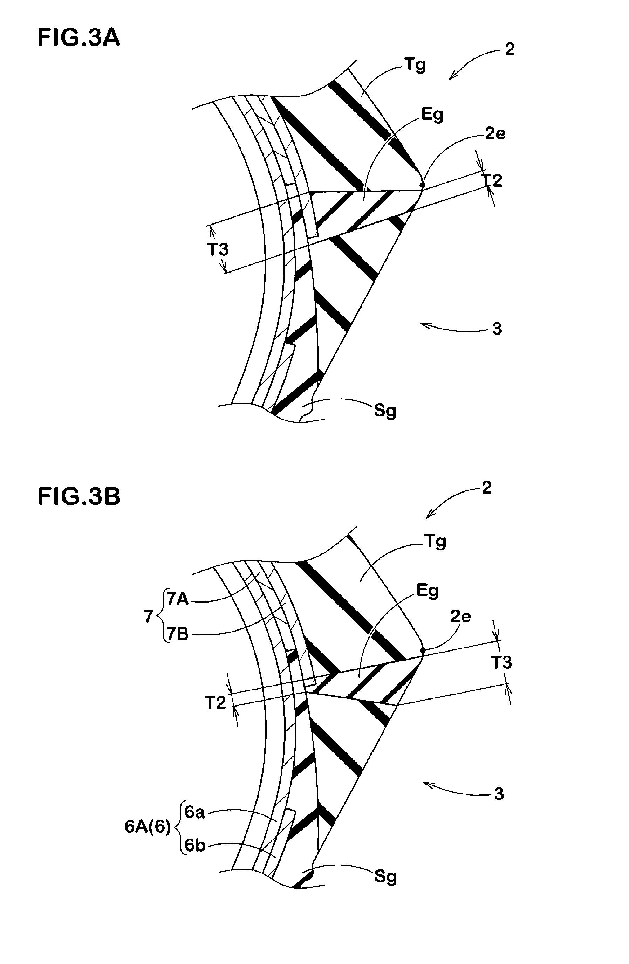

Fig. 3A is a cross sectional view of the edge rubber Eg according to another embodiment of the present invention. In the meridian cross section, this edge rubber Eg has a thickness gradually increasing toward axially inward of the tire. This edge rubber can more effectively suppress lifting of the carcass 6 which may occur in high speed cornering, to stabilize the tire footprint, since the carcass 6 is pressed by an increased area of the edge rubber Eg as compared with an edge rubber having a constant thickness.

Fig. 3B is a cross sectional view of the edge rubber Eg according to still another embodiment of the present invention. In the meridian cross section, this edge rubber Eg has a thickness gradually increasing toward axially outward of the tire. This edge rubber can more effectively prevent a large lateral deformation of the tread rubber toward inside of cornering from occurring when cornering at a very large camber angle.

In the edge rubbers as shown in Figs. 3A and 3B, if a ratio T3/T2 of a maximum thickness T3 to a minimum thickness T2 of the edge rubber is too large, the tire weight tends to increase to increase the manufacturing cost and to deteriorate the steering stability of a motorcycle. Therefore, it is preferable that the ratio T3/T2 is at most 5, especially at most 4, more especially at most 3. Further, it is preferable that the thickness T2 falls within the above-mentioned range of the thickness T1.

In the above embodiments, the axially inner end of the edge rubber Eg is connected to an axial edge portion 7s of the tread reinforcing cord layer 7, but the tread reinforcing cord layer 7 may have a smaller axial width and the axially inner end of the edge rubber Eg may be connected to an axially outer surface of the carcass 6 and/or an axially outer surface of the sidewall rubber Sg.

While preferable embodiments of the present invention have been described with reference to the drawings, it goes without saying that the present invention is not limited to only such embodiments and various changes and modifications may be made.

The present invention is more specifically described and explained by means of the following examples. It is to be understood that the present invention is not limited to these examples.

### EXAMPLES

Rear tires for motorcycle to be tested were manufactured based on the specifications shown in Table 1, and each of them was mounted on a 1,000 cc motorcycle with a front tire. The motorcycle was run on a dry asphalt test course, and the cornering stability, vibration absorptivity and feeling of rigidity were evaluated by driver's sensory evaluation of ten-point rating scale. The larger the value, the better the performance. Common specifications are shown below.
<Front tire>
Tire size: 120/80R420
Inner pressure: 210 kPa
<Rear tire>
Tire size: 200/65R420
Inner pressure: 190 kPa
Number of carcass plies: 2 plies
Angle of carcass cords: 88°/88°
Material of carcass cords: rayon
Fineness of carcass cords: 2/1,840 dtex
Number of belt plies: 2 plies
Material of belt cords: aramid
Rim: 6.25×420

Road temperature during the test was 42°C. Test results are shown in Table 1.

It is observed in Table 1 that as compared with the Comparative Examples, the cornering performance, vibration absorptivity and feeling of rigidity are enhanced by providing a tire with a pair of edge rubbers having a prescribed shape and an appropriate hardness.

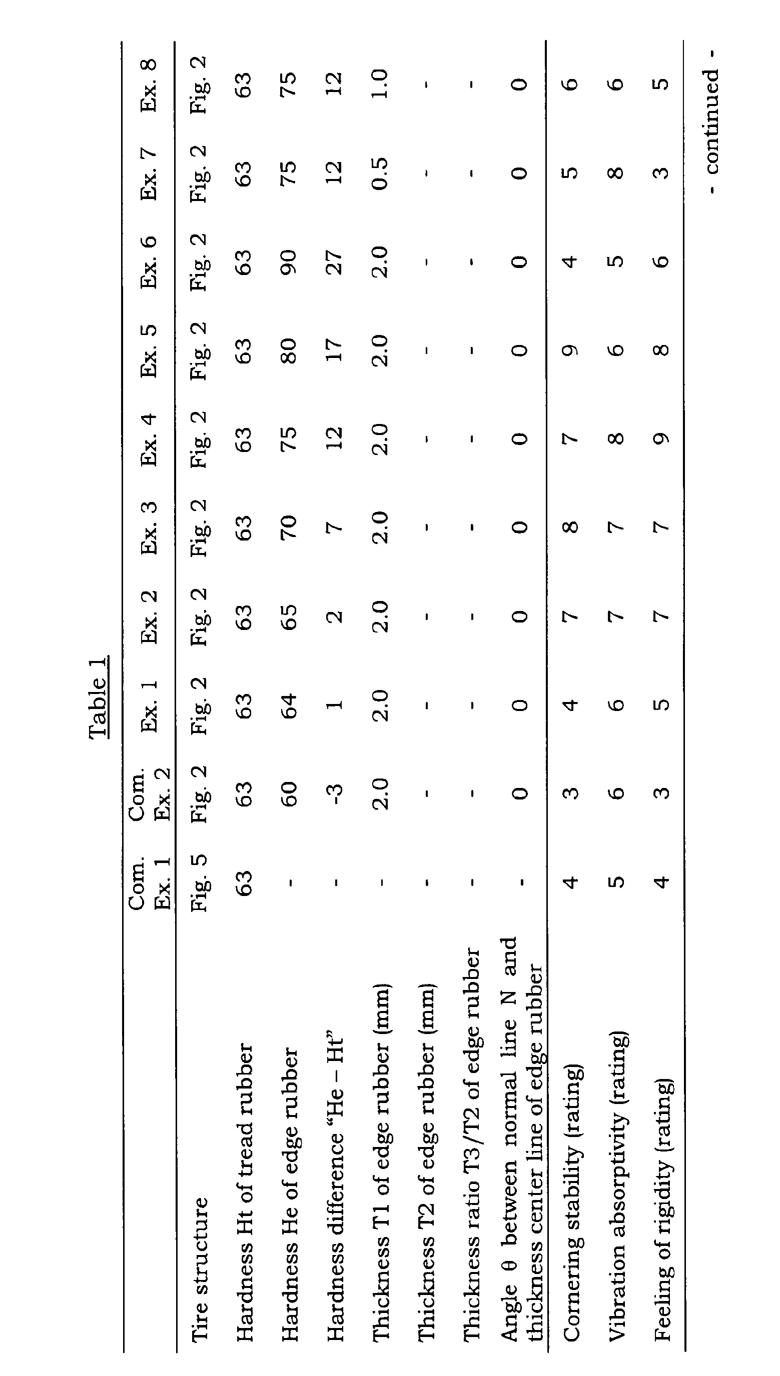

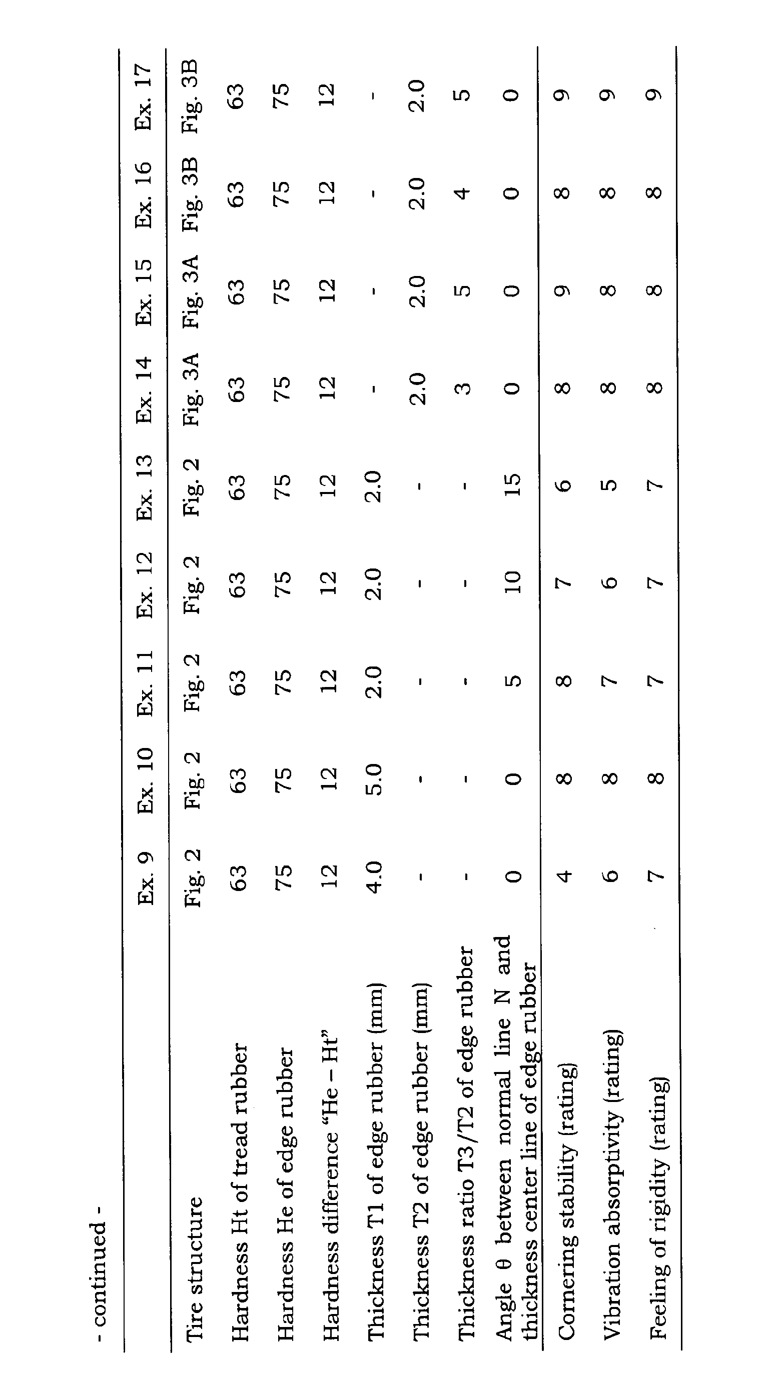

## Claims

1. A motorcycle tire comprising:
a carcass extending from a tread portion to each of a pair of bead cores in opposing bead portions through sidewall portions, said tread portion having a ground contact surface curved in the form of a radially outwardly convex arc and extending axially outwardly from the tire equator so that a tread width defined by an axial distance between both axially outer edges of the tread portion provides the maximum width of the tire,
a tread reinforcing cord layer disposed radially outward of the carcass in the tread portion,
a tread rubber extending between the axially outer edges of the tread portion, and
a pair of edge rubbers which are connected with both side surfaces of the tread rubber and extend axially inwardly with a small thickness from an axially outer surface of the tire and which has a hardness He larger than a hardness Ht of the tread rubber.

2. The motorcycle tire of claim 1, wherein each of the edge rubbers is disposed so that the center line of the thickness of the edge rubber forms an angle of at most 10° with a normal line to the carcass drawn to a point at the intersection of a radially outer surface of the carcass with an extension of the center line.

3. The motorcycle tire of claim 1 or 2, wherein the hardness He of the edge rubbers is from 70 to 80.

4. The motorcycle tire of any one of claims 1 to 3, wherein a difference "He - Ht" between the hardness He and the hardness Ht is 2 or more.

5. The motorcycle tire of any one of claims 1 to 4, wherein the edge rubbers have a constant thickness.

6. The motorcycle tire of any one of claims 1 to 4, wherein the edge rubbers have a thickness gradually increasing toward axially inward of the tire.

7. The motorcycle tire of any one of claims 1 to 4, wherein the edge rubbers have a thickness gradually increasing toward axially outward of the tire.

8. The motorcycle tire of any one of claims 1 to 5, wherein the edge rubbers have a thickness of 1.5 to 3.0 mm.

9. The motorcycle tire of any one of claims 1 to 8, wherein a pair of wing rubbers are disposed radially inward of the edge rubbers in contact with the radially inner surfaces of the edge rubbers, each of said wing rubbers having an approximately triangular cross section such that an axial width thereof gradually decreases toward radially inward of the tire and an axially outer surface thereof forms an upper part of the axially outer surface of the tire.

10. The motorcycle tire of any one of claims 1 to 9, wherein an axially inner end of each of the edge rubbers is in contact with an axial edge portion of the tread reinforcing cord layer.

11. The motorcycle tire of any one of claims 1 to 9, wherein an axially inner end of each of the edge rubbers is in contact with the carcass.
